# EUROPÄISCHE PATENTSCHRIFT

(11) **EP 1 504 943 B1**
(45) Veröffentlichungstag und Bekanntmachung des Hinweises auf die Patenterteilung: **15.11.2006**
(21) Anmeldenummer: 04103141.0
(22) Anmeldetag: 02.07.2004
(51) Int. Cl.: B60K 15/035

(54) **Kraftstoffbehälter mit Ausperlbehälter für ein Kraftfahrzeug**
Fuel tank with bubble extraction container for motor vehicle
Réservoir de carburant à conteneur de dissipation de bulles pour automobile

(30) Priorität: 04.08.2003 DE 10335626
(43) Veröffentlichungstag der Anmeldung: 09.02.2005
(73) Patentinhaber: SIEMENS AKTIENGESELLSCHAFT, 80333 München (DE)
(72) Erfinder: Krogull, Christian, 45899 Gelsenkirchen (DE); Reiter, Frank, 42781 Haan (DE)

(56) Entgegenhaltungen:
- WO-A-01/21991
- WO-A-02/26514
- DE-A1- 10 063 414
- DE-A1- 10 201 652
- DE-U1- 9 111 920
- US-B1- 6 182 693

## Beschreibung

Die Erfindung betrifft einen Kraftstoffbehälter für ein Kraftfahrzeug mit einer von einer Wandung begrenzten Kammer zur Aufnahme von Kraftstoff, mit einer einen Ausperlbehälter aufweisenden Entlüftungseinrichtung, mit an dem Ausperlbehälter angeschlossenen, in den oberhalb des Kraftstoffs befindlichen Bereich der Kammer geführten Entlüftungsleitungen, mit einem eine Öffnung in der Wandung verschließenden Verschlussdeckel, wobei der Ausperlbehälter und der Verschlussdeckel eine bauliche Einheit bilden.

Solche Kraftstoffbehälter werden in heutigen Kraftfahrzeugen meist aus Kunststoff im Spritzguss- oder im Blasverfahren gefertigt und sind aus der Praxis bekannt (DE 100 63 414 A1). Der Ausperlbehälter dient zur Abscheidung von Kraftstoff aus Kraftstoffdämpfen und wird meist über einen Aktivkohlefilter mit der Umgebung verbunden. Über den Aktivkohlefilter erfolgt ein Druckausgleich der Kammer bei einem Nachtanken des Kraftstoffbehälters oder bei einem Temperaturwechsel. Der Ausperlbehälter und die Entlüftungsleitungen werden an der Innenseite der Wandung des Kraftstoffbehälters befestigt. Nachteilig bei dem bekannten Kraftstoffbehälter ist, dass sich die Befestigung des Ausperlbehälters und der Entlüftungsleitungen sehr aufwändig gestaltet. Zudem sind an der Innenseite des Kraftstoffbehälters aufwändig zu fertigende Befestigungselemente erforderlich, an denen der Ausperlbehälter und die Entlüftungsleitungen montiert werden.

Aus der WO 02/26514 A2 ist ein Kraftstoffbehälter mit einer Entlüftungseinrichtung bekannt, bei der eine Entlüftungsleitung mit einer zwischen Behälteroberseite und Behälterunterseite eingespannten Stütze gehalten wird. Zur Halterung der Stütze im Kraftstoffbehälter besitzt dieser spezielle in der Behälterwandung ausgebildete Raststellen.

Der Erfindung liegt das Problem zugrunde, einen Kraftstoffbehälter der eingangs genannten Art so zu gestalten, dass er besonders kostengünstig herstellbar ist.

Dieses Problem wird erfindungsgemäß dadurch gelöst, dass an dem Ausperlbehälter Federelemente befestigt sind und die Federelemente mit den freien Enden der Entlüftungsleitungen verbunden sind.

Durch diese Gestaltung lässt sich der Ausperlbehälter mit dem Verschlussdeckel als bauliche Einheit herstellen und ohne Einsatz weiterer Befestigungselemente an der Wandung der Kammer montieren. Dies führt zu einer Vereinfachung der Fertigungskosten des erfindungsgemäßen Kraftstoffbehälters. Ein weiterer Vorteil dieser Gestaltung besteht darin, dass in einem Reparaturfall der Ausperlbehälter zugänglich ist. Dies ist von Vorteil, da heutige Ausperlbehälter häufig verschiedene Bauteile, wie Ventile, Pumpen oder Kühleinrichtungen enthalten. Diese Bauteile lassen sich nach der Entfernung des Verschlussdeckels warten. Weiterhin erfordert die Verlegung der Entlüftungsleitungen einen besonders geringen baulichen Aufwand. Zudem erfordert die Vorspannung der Entlüftungsleitungen in die vorgesehene Position einen besonders geringen baulichen Aufwand.

Zur weiteren Verringerung des Montageaufwandes des Ausperlbehälters trägt es bei, wenn eine zum Druckausgleich der Kammer mit der Umgebung führende Leitung den Verschlussdeckel durchdringt. Solche Leitungen verbinden in der Regel die Kammer über einen Aktivkohlefilter mit der Umgebung und ermöglichen damit bei Temperaturwechsel des Kraftstoffs oder beim Nachtanken ein Einströmen und Ausströmen von Luft in die Kammer.

Der erfindungsgemäße Kraftstoffbehälter gestaltet sich besonders kompakt, wenn der Ausperlbehälter an der der Kammer zugewandten Seite des Verschlussdeckels angeordnet ist. Durch diese Gestaltung ist der Ausperlbehälter an der Innenseite des Kraftstoffbehälters angeordnet.

Der erfindungsgemäße Kraftstoffbehälter mit einer ausschließlich im Reparaturfall freigebbaren Öffnung gestaltet sich konstruktiv besonders einfach, wenn der Verschlussdeckel einstückig mit der Wandung gefertigt ist. Im Reparaturfall wird die Wandung im Bereich des Verschlussdeckels aufgetrennt und nach der Reparatur wieder mit der Wandung verbunden. Hierdurch werden Emissionen an Kraftstoff zumindest vor dem Reparaturfall besonders gering gehalten.

Die bauliche Einheit aus Ausperlbehälter und Verschlussdeckel gestaltet sich gemäß einer anderen vorteilhaften Weiterbildung der Erfindung besonders kompakt, wenn der Ausperlbehälter einstückig mit dem Verschlussdeckel gefertigt ist. Die kompakte Gestaltung der baulichen Einheit aus Ausperlbehälter und Verschlussdeckel führt zudem zu einem besonders großen nutzbaren Volumen der Kammer.

Zur weiteren Vereinfachung der Montage des Ausperlbehälters trägt es gemäß einer anderen vorteilhaften Weiterbildung der Erfindung bei, wenn der Ausperlbehälter einen Flansch zur Befestigung und Abdichtung gegenüber der Wandung hat.

Ausperlbehälter und Verschlussdeckel lassen sich gemäß einer anderen vorteilhaften Weiterbildung der Erfindung einfach für den vorgesehenen Anwendungsfall zusammenstellen, wenn die Verbindung des Ausperlbehälters mit dem Verschlussdeckel ein Schraubgewinde oder einen Bajonettverschluss hat.

Der an der Innenseite des Verschlussdeckels angeordnete Ausperlbehälter lässt sich gemäß einer anderen vorteilhaften Weiterbildung der Erfindung besonders einfach in der Kammer montieren, wenn er kleinere Abmessungen aufweist als die von dem Verschlussdeckel verschlossene Öffnung in der Wandung.

Entlüftungsleitungen mit besonders großen Abmessungen lassen sich gemäß einer anderen vorteilhaften Weiterbildung der Erfindung einfach durch die von dem Verschlussdeckel verschlossene Öffnung montieren, wenn die Entlüftungsleitungen elastisch gestaltet sind. Dies trägt zur weiteren Vereinfachung der Montage der Entlüftungseinrichtung in dem erfindungsgemäßen Kraftstoffbehälter bei. Dabei können die Entlüftungsleitungen bei der Montage beispielsweise geklappt oder gefaltet werden und sich innerhalb der Kammer entfalten. Der Einsatz der elastischen Entlüftungsleitungen ermöglicht zudem die nachträgliche Montage und Demontage des Ausperlbehälters mit den Entlüftungsleitungen bei einteiligen Kraftstoffbehältern durch die von dem Verschlussdeckel verschließbare Öffnung.

Die Entlüftungsleitungen lassen sich gemäß einer anderen vorteilhaften Weiterbildung der Erfindung besonders kostengünstig aus Kunststoff im Spritzgussverfahren fertigen, wenn die Entlüftungsleitungen zumindest einen Abschnitt aus Wellrohr aufweisen.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: schematisch eine Schnittdarstellung durch einen erfindungsgemäßen Kraftstoffbehälter.
- Figur 2: schematisch einen Teilschnitt durch eine weitere Ausführungsform des erfindungsgemäßen Kraftstoffbehälters.
- Figur 3: schematisch einen Teilschnitt durch eine weitere Ausführungsform des erfindungsgemäßen Kraftstoffbehälters.

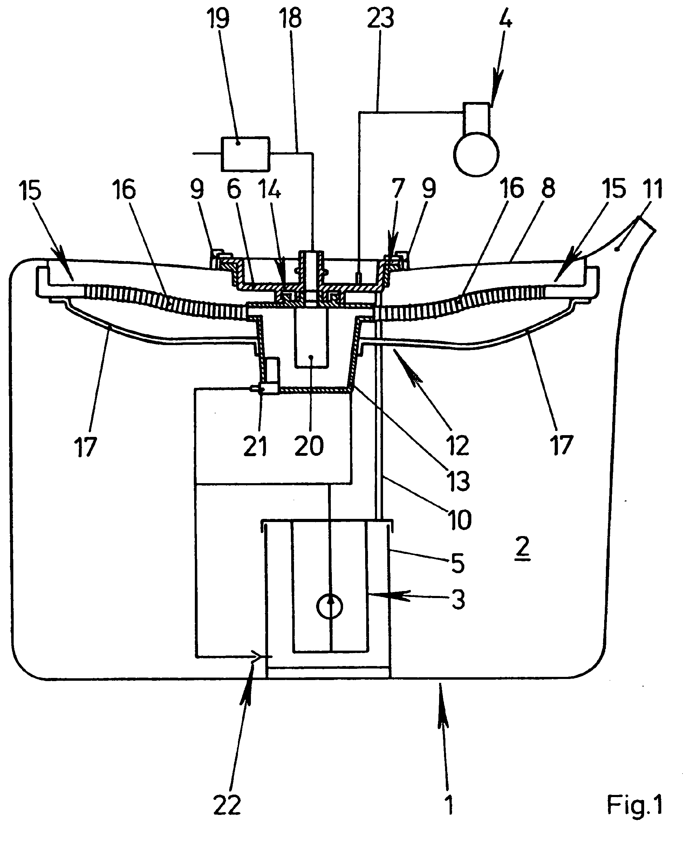

Figur 1 zeigt schematisch eine Schnittdarstellung durch einen Kraftstoffbehälter 1 mit einer Kammer 2 zur Aufnahme von Kraftstoff und einer darin angeordneten Fördereinheit 3 zur Förderung des Kraftstoffs zu einer Brennkraftmaschine 4 eines Kraftfahrzeuges. Die Fördereinheit 3 ist in einem Schwalltopf 5 unterhalb eines Verschlussdeckels 6 angeordnet. Der Verschlussdeckel 6 verschließt eine Öffnung 7 einer Wandung 8 des Kraftstoffbehälters 1 und wird von Spannelementen 9 dichtend gegen die Wandung 8 vorgespannt. Eine Halterung 10 zur Vorspannung des Schwalltopfes 5 und der Fördereinheit 3 gegen den Boden der Kammer 2 ist an der Unterseite des Verschlussdeckels 6 befestigt. Der Kraftstoffbehälter 1 hat zudem einen Einfüllstutzen 11 und eine Entlüftungseinrichtung 12 mit einem an dem Verschlussdeckel 6 befestigten Ausperlbehälter 13. Die Befestigung des Ausperlbehälters 13 an dem Verschlussdeckel 6 weist einen Bajonettverschluss 14 auf. Von dem Ausperlbehälter 13 führen Entlüftungsleitungen 15 in äußere obere Bereiche der Kammer 2. Die Entlüftungsleitungen 15 haben jeweils einen elastischen Abschnitt aus Wellrohr 16 und werden mit ihren äußeren Enden über an dem Ausperlbehälter 13 befestigte Federelemente 17 gegen den oberen Bereich der Wandung 8 des Kraftstoffbehälters 1 vorgespannt.

Der Ausperlbehälter 13 ist über eine durch den Verschlussdeckel 6 geführte Leitung 18 mit einem Aktivkohlefilter 19 verbunden. Der Aktivkohlefilter 19 ermöglicht einen Druckausgleich des Ausperlbehälters 13 mit der Umgebung. Innerhalb des Ausperlbehälters 13 ist vor der zu dem Aktivkohlefilter 19 führenden Leitung 18 ein Ventil 20 angeordnet, welches beispielsweise bei extremen Fahrsituationen des Kraftfahrzeuges oder bei einem Überschlag die Leitung 18 verschließt und damit verhindert, dass Kraftstoff aus dem Kraftstoffbehälter 1 austreten kann.

Die Fördereinheit 3 fördert Kraftstoff zu einer ersten, im Bodenbereich des Ausperlbehälters 13 angeordneten Saugstrahlpumpe 21, zu einer zweiten, im Bodenbereich des Schwalltopfes 5 angeordneten Saugstrahlpumpe 22 und über eine durch den Verschlussdeckel 6 geführte Vorlaufleitung 23 zu der Brennkraftmaschine 4. Die im Bodenbereich des Ausperlbehälters 13 angeordnete Saugstrahlpumpe 21 ermöglicht es, im Ausperlbehälter 13 abgeschiedenen Kraftstoff abzusaugen und der Kammer 2 zuzuführen. Über die im Bodenbereich des Schwalltopfes 5 angeordnete Saugstrahlpumpe 22 wird der Schwalltopf 5 mit Kraftstoff aus der Kammer 2 befüllt.

Der Schwalltopf 5 und der Ausperlbehälter 13 weisen jeweils einen kleineren Querschnitt auf als die Öffnung 7 der Wandung 8. Damit lassen sich der Ausperlbehälter 13 und der Schwalltopf 5 mit der darin angeordneten Fördereinheit 3 durch die Öffnung 7 in der Wandung 8 des Kraftstoffbehälters 1 montieren.

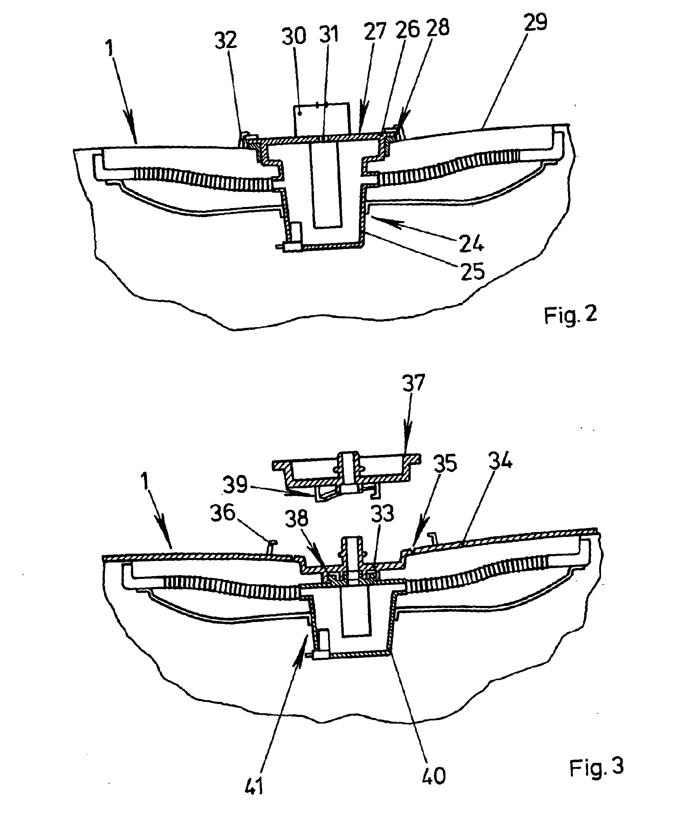

Figur 2 zeigt einen Teilschnitt durch eine weitere Ausführungsform des Kraftstoffbehälters, bei der eine Entlüftungseinrichtung 24 mit einem Ausperlbehälter 25 einen umlaufenden Flansch 26 als Verschlussdeckel 27 für eine Öffnung 28 in einer Wandung 29 des Kraftstoffbehälters 1 hat. Damit sind Verschlussdeckel 27 und Ausperlbehälter 25 einstückig gefertigt. Ein Aktivkohlefilter 30 ist unmittelbar auf der Oberseite des Ausperlbehälters 25 dichtend befestigt und deckt eine Öffnung 31 ab. Der Flansch 26 des Ausperlbehälters 25 ist über Spannelemente 32 dichtend gegen die Wandung 29 vorgespannt. Ansonsten ist die Entlüftungseinrichtung 24 wie die aus Figur 1 aufgebaut. Weiterhin zeigt Figur 2, dass der Verschlussdeckel 27 keine weiteren Haltemittel, beispielsweise für die in Figur 1 dargestellte Fördereinheit 3 hat.

Figur 3 zeigt einen Teilschnitt durch eine weitere Ausführungsform des Kraftstoffbehälters 1, bei dem ein erster Verschlussdeckel 33 einstückig mit einer Wandung 34 des Kraftstoffbehälters 1 gefertigt ist. Der Verschlussdeckel 33 weist einen Schneidrand 35 mit einer Querschnittsverringerung auf. Im Reparaturfall lässt sich der Verschlussdeckel 33 an dem Schneidrand 35 heraustrennen und damit eine Öffnung in der Wandung 34 erzeugen. Nach dem Heraustrennen wird die Öffnung über einen mittels Spannelemente 36 mit der Wandung 34 verbindbaren zweiten Verschlussdeckel 37 wieder verschlossen. Beide Verschlussdeckel 33, 37 weisen ein Schraubgewinde 38, 39 zur Verbindung mit einem Ausperlbehälter 40 einer Entlüftungseinrichtung 41 auf. Im Reparaturfall lässt sich damit der Ausperlbehälter 40 nach dem Heraustrennen des ersten Verschlussdeckels 33 aus dem Kraftstoffbehälter 1 entnehmen und nach einer Verbindung mit dem zweiten Verschlussdeckel 37 wieder durch die erzeugte Öffnung einsetzen. Auch bei dieser Ausführungsform sind an den Verschlussdeckeln 33, 37 keine Haltemittel für die in Figur 1 dargestellte Fördereinheit 3 angeordnet. Die Entlüftungseinrichtung 41 ist ansonsten wie die aus Figur 1 aufgebaut.

## Patentansprüche

1. Kraftstoffbehälter (1) für ein Kraftfahrzeug mit einer von einer Wandung begrenzten Kammer (2) zur Aufnahme von Kraftstoff, mit einer einen Ausperlbehälter (13, 25, 40) aufweisenden Entlüftungseinrichtung (12), mit an dem Ausperlbehälter angeschlossenen, in den oberhalb des Kraftstoffs befindlichen Bereich der Kammer (2) geführten Entlüftungsleitungen (15), mit einem eine Öffnung in der Wandung verschließenden Verschlussdeckel (6), wobei der Ausperlbehälter (13, 25, 40) und der Verschlussdeckel (6, 27, 33, 37) eine bauliche Einheit bilden, **dadurch gekennzeichnet, dass** die Entlüftungsleitungen (15) in eine vorgesehene Position vorgespannt sind, dass an dem Ausperlbehälter (13, 25, 40) Federelemente (17) befestigt sind und dass die Federelemente (17) mit den freien Enden der Entlüftungsleitungen (15) verbunden sind.

2. Kraftstoffbehälter nach Anspruch 1, **dadurch gekennzeichnet, dass** eine zum Druckausgleich der Kammer (2) mit der Umgebung führende Leitung (18) den Verschlussdeckel (6, 27, 33, 37) durchdringt.

3. Kraftstoffbehälter nach Anspruch 1 oder 2, **dadurch gekennzeichnet, dass** der Ausperlbehälter (13, 40) an der der Kammer (2) zugewandten Seite des Verschlussdeckels (6, 33, 37) angeordnet ist.

4. Kraftstoffbehälter nach zumindest einem der vorhergehenden Ansprüche, **dadurch gekennzeichnet, dass** der Verschlussdeckel (33) einstückig mit der Wandung (34) gefertigt ist.

5. Kraftstoffbehälter nach zumindest einem der vorhergehenden Ansprüche, **dadurch gekennzeichnet, dass** der Ausperlbehälter (25) einstückig mit dem Verschlussdeckel (27) gefertigt ist.

6. Kraftstoffbehälter nach zumindest einem der vorhergehenden Ansprüche, **dadurch gekennzeichnet, dass** der Ausperlbehälter (25) einen Flansch (26) zur Befestigung und Abdichtung gegenüber der Wandung (29) hat.

7. Kraftstoffbehälter nach zumindest einem der vorhergehenden Ansprüche, **dadurch gekennzeichnet, dass** die Verbindung des Ausperlbehälters (13, 40) mit dem Verschlussdeckel (6, 33, 37) ein Schraubgewinde (38, 39) oder einen Bajonettverschluss (14) hat.

8. Kraftstoffbehälter nach zumindest einem der vorhergehenden Ansprüche, **dadurch gekennzeichnet, dass** der Ausperlbehälter (13, 25, 40) kleinere Abmessungen aufweist als die von dem Verschlussdeckel (6, 27, 33, 37)verschlossene Öffnung (7, 28) in der Wandung (2).

9. Kraftstoffbehälter nach zumindest einem der vorhergehenden Ansprüche, **dadurch gekennzeichnet, dass** die Entlüftungsleitungen (12) elastisch gestaltet sind.

10. Kraftstoffbehälter nach zumindest einem der vorhergehenden Ansprüche, **dadurch gekennzeichnet, dass** die Entlüftungsleitungen (12) zumindest einen Abschnitt aus Wellrohr (16) aufweisen.

## Claims

1. Fuel container (1) for a motor vehicle having a chamber (2) which is bounded by a wall and has the purpose of holding fuel, with a venting device (12) which has a bubble container (13, 25, 40), with venting lines (15) which are connected to the bubble container and are led into the region of the chamber (2) which is located above the fuel, having a closure lid (6) which closes an opening in the wall, the bubble container (13, 25, 40) and the closure lid (6, 27, 33, 37) forming one structural unit, **characterized in that** the venting lines (15) are prestressed into an anticipated position, **in that** spring elements (17) are attached to the bubble container (13, 25, 40), and **in that** the spring elements (17) are connected to the free ends of the venting lines (15).

2. Fuel container according to Claim 1, **characterized in that** a line (18) which leads to the surroundings in order to compensate the pressure in the chamber (2) penetrates the closure lid (6, 27, 33, 37).

3. Fuel container according to Claim 1 or 2, **characterized in that** the bubble container (13, 40) is arranged on the side of the closure lid (6, 33, 37) facing the chamber (2).

4. Fuel container according to at least one of the preceding claims, **characterized in that** the closure lid (33) is fabricated in one piece with the wall (34).

5. Fuel container according to at least one of the preceding claims, **characterized in that** the bubble container (25) is fabricated in one piece with the closure lid (27).

6. Fuel container according to at least one of the preceding claims, **characterized in that** the bubble container (25) has a flange (26) for attaching to the wall (29) and providing a seal with respect to the wall.

7. Fuel container according to at least one of the preceding claims, **characterized in that** the connection of the bubble container (13, 40) to the closure lid (6, 33, 37) has a screw thread (38, 39) or a bayonet closure (14).

8. Fuel container according to at least one of the preceding claims, **characterized in that** the bubble container (13, 25, 40) has smaller dimensions than the opening (7, 28) in the wall (2) which is closed off by the closure lid (6, 27, 33, 37).

9. Fuel container according to at least one of the preceding claims, **characterized in that** the venting lines (12) are of elastic design.

10. Fuel container according to at least one of the preceding claims, **characterized in that** the venting lines (12) have at least one section made of corrugated tubing (16).

## Revendications

1. Réservoir à carburant (1) pour un véhicule automobile, comportant un compartiment (2) délimité par une paroi et destiné à recevoir du carburant, un système d'aération (12) comportant un vase (13, 25, 40) de dégazage du carburant, des conduites d'aération (15) raccordées au vase de dégazage du carburant et conduisant à la zone du compartiment (2) se trouvant au-dessus du carburant, un couvercle de fermeture (6) fermant une ouverture dans la paroi, où le vase (13, 25, 40) de dégazage du carburant et le couvercle de fermeture (6, 27, 33, 37) forment une unité constructive, **caractérisé par le fait que** les conduites d'aération (15) sont fixées dans une position prévue, que des organes à ressort (17) sont fixés au vase (13, 25, 40) de dégazage du carburant et que les organes à ressort (17) sont liés aux extrémités libres des conduites d'aération (15).

2. Réservoir à carburant selon la revendication 1, **caractérisé par le fait qu'**une conduite (18) destinée à la compensation de la pression dans le compartiment (2) avec l'environnement extérieur traverse le couvercle de fermeture (6, 27, 33, 37).

3. Réservoir à carburant selon la revendication 1 ou 2, c a - ractérisé par le fait que le vase (13, 40) de dégazage du carburant est disposé sur la face du couvercle de fermeture (6, 33, 37) tournée vers le compartiment (2).

4. Réservoir à carburant selon au moins l'une des revendications précédentes, **caractérisé par le fait que** le couvercle de fermeture (33) est fabriqué en une seule pièce avec la paroi (34).

5. Réservoir à carburant selon au moins l'une des revendications précédentes, **caractérisé par le fait que** le vase (25) de dégazage du carburant est fabriqué en une seule pièce avec le couvercle de fermeture (27).

6. Réservoir à carburant selon au moins l'une des revendications précédentes, **caractérisé par le fait que** le vase (25) de dégazage du carburant comporte une bride (26) destinée à sa fixation à la paroi (29) et à le rendre étanche par rapport à la paroi (29).

7. Réservoir à carburant selon au moins l'une des revendications précédentes, **caractérisé par le fait que** le lien entre le vase (13, 40) de dégazage du carburant et le couvercle de fermeture (6, 33, 37) a un pas de vis (38, 39) ou un emboîtement à baïonnette (14).

8. Réservoir à carburant selon au moins l'une des revendications précédentes, **caractérisé par le fait que** le vase (13, 25, 40) de dégazage du carburant a des dimensions plus petites que l'ouverture (7, 28) dans la paroi (2) fermée par le couvercle de fermeture (6, 27, 33, 37).

9. Réservoir à carburant selon au moins l'une des revendications précédentes, **caractérisé par le fait que** les conduites d'aération (12) sont élastiques.

10. Réservoir à carburant selon au moins l'une des revendications précédentes, **caractérisé par le fait que** les conduites d'aération (12) comportent au moins une section en tube ondulé (16).
